# EUROPÄISCHE PATENTSCHRIFT

(11) **EP 3 870 477 B1**
(45) Veröffentlichungstag und Bekanntmachung des Hinweises auf die Patenterteilung: **20.07.2022**
(21) Anmeldenummer: 19794974.6
(22) Anmeldetag: 24.10.2019
(51) Int. Cl.: B60N 2/68, B60N 2/42

(54) **RAHMEN FÜR EINEN FAHRZEUGSITZ, FAHRZEUGSITZ FÜR EIN KRAFTFAHRZEUG**
FRAME FOR A VEHICLE SEAT, VEHICLE SEAT FOR A MOTOR VEHICLE
CADRE POUR UN SIÈGE DE VÉHICULE, SIÈGE POUR UN VÉHICULE AUTOMOBILE

(30) Priorität: 25.10.2018 DE 102018218292
(43) Veröffentlichungstag der Anmeldung: 01.09.2021
(73) Patentinhaber: VOLKSWAGEN AKTIENGESELLSCHAFT, 38440 Wolfsburg (DE)
(72) Erfinder: HAGEN, Stefan, 38479 Tappenbeck (DE); GRESENS, Annett, 38165 Lehre (Flechtorf) (DE); ZIMMERMANN, Björn, 38527 Meine (DE); NAVARRO PEREZ, Daniel, 38518 Gifhorn (DE); PACHONICK, Alexander, 38126 Braunschweig (DE)
(86) Internationale Anmeldenummer: PCT/EP2019/079045
(87) Internationale Veröffentlichungsnummer: WO 2020/084063

(56) Entgegenhaltungen:
- DE-A1- 2 546 157
- DE-A1- 19 650 503
- GB-A- 2 246 699
- US-A- 4 192 545

## Beschreibung

Die Erfindung betrifft einen Rahmen für einen Fahrzeugsitz, wobei der Rahmen zwei Seitenelemente und zwei Querelemente aufweist, wobei die Querelemente jeweils zwei einander gegenüberliegende freie Enden der Seitenelemente miteinander verbinden, mit zumindest einem flexiblen Zugelement, das diagonal über den Rahmen derart gespannt ist, dass ein erstes Ende des Zugelements an einem der Seitenelemente und ein zweites Ende des Zugelements an dem anderen der Seitenelemente befestigt ist.

Weiterhin betrifft die Erfindung einen Fahrzeugsitz für ein Kraftfahrzeug, mit einer Rückenlehne, die einen derartigen Rahmen und eine von dem Rahmen getragene Polsterung aufweist.

Außerdem betrifft die Erfindung ein Kraftfahrzeug mit mehreren Fahrzeugsitzen, von denen zumindest einer wie oben beschrieben ausgebildet ist.

Rahmen für Fahrzeugsitze sind aus dem Stand der Technik bereits bekannt. So offenbart beispielsweise die Offenlegungsschrift DE 196 50 503 A1 einen Rahmen für ein Fahrzeugsitz mit zwei Seitenteilen, die durch ein starres oberen Querteil miteinander verbunden sind. Weiterhin weist der Rahmen einen Verstärkungsdraht auf, der sich diagonal über den Rahmen erstreckt und auf Zug belastbar ist, um den Rahmen zu versteifen, sodass insbesondere eine parallelogrammartige Verschiebung des oberen Querteils des Rahmens zum unteren Querteil des Rahmens vermieden oder zumindest erschwert wird. Aus der Offenlegungsschrift GB 2 246 699 A ist ein weiterer Rahmen für einen Fahrzeugsitz bekannt, der ebenfalls ein diagonal gespanntes Zugelement aufweist.

Der Erfindung liegt die Aufgabe zugrunde, einen Rahmen zu schaffen, bei welchem das Zugelement einfach diagonal über den Rahmen spannbar ist, um die Montage zu erleichtern und die Steifheit des Rahmens zu verbessern.

Die der Erfindung zugrundeliegende Aufgabe wird durch einen Rahmen mit den Merkmalen des Anspruchs 1 gelöst. Der erfindungsgemäße Rahmen zeichnet sich dadurch aus, dass zumindest eines der Seitenelemente einen einer Befestigungsstelle des Zugelements an dem Seitenteil zugeordneten und das Zugelement umlenkenden Vorsprung aufweist, durch welchen das Zugelement beim Befestigen an der Befestigungsstelle gespannt wird. Durch den Vorsprung wird das Zugelement somit von einer direkten beziehungsweise nur geraden Verbindung zwischen den beiden Seitenelementen ausgelenkt beziehungsweise umgelenkt, sodass sich eine Krümmung in dem Zugelement ergibt. Durch diese Krümmung wird es ermöglicht, dass bei Befestigen des Zugelements an dem Seitenelement durch das Umspannen des Vorsprungs eine Zugspannung auf das Zugelement in seiner Längserstreckung ausgeübt wird, welche die gewünschte Zugspannung gewährleistet.

Bevorzugt ist die Befestigungsstelle als Schraubstelle ausgebildet, wobei das Zugelement eine Schraubenöffnung aufweist, durch welche ein Schaft einer Befestigungsschraube in die Schraubstelle, insbesondere in eine Gewindehülse der Schraubstelle, eingeschraubt ist, wobei das Zugelement zwischen einem Schraubenkopf der Befestigungsschraube und dem Seitenelement verspannt ist. Das Zugelement wird somit an der Befestigungsstelle des Seitenelement fest geschraubt. Durch den Schraubvorgang wird das Ende des Zugelements beim Einschrauben der Befestigungsschraube zu dem Seitenelement zu der Auflagefläche auf dem Seitenelement hingezogen. Dabei wird mithilfe des umlenkenden Vorsprungs die gewünschte Vorspannung auf das Zugelement aufgebracht, die eine vorteilhafte Steifigkeit des Rahmens gewährleistet.

Weiterhin ist bevorzugt vorgesehen, dass der Vorsprung an einer Seitenkante des Seitenelements ausgebildet ist. Dadurch ist der Seitenvorsprung einfach in die Struktur des Rahmens integrierbar. Vorteilhafterweise ist das Zugelement um die Seitenkante des Seitenelements herum umgelenkt, sodass die Befestigungsstelle nicht in der Ebene liegt, in welcher sich das Zugelement diagonal über den Rahmen erstreckt. Stattdessen weist das Zugelement an zumindest einem seiner Enden eine Umlenkung um etwa 90° auf. Damit ist die Befestigungsstelle nicht an einer Rückseite des Seitenteils, über welche das Zugelement gespannt ist, sondern an einer Seitenfläche des Seitenteils ausgebildet. Durch das Anordnen des Vorsprungs an der Seitenkante des Seitenelements wird dadurch eine besonders vorteilhafte Umlenkung des Zugelements gewährleistet.

Insbesondere wird das Zugelement durch den Vorsprung in einem spitzen Winkel umgelenkt. Dies ergibt sich insbesondere dann, wenn der Vorsprung wie zuvor beschrieben an der Seitenkante des Seitenelements ausgebildet und das Zugelement von der Rückseite des Seitenelements zu der Seitenfläche geführt ist. Durch den zusätzlichen Vorsprung, insbesondere an der Seitenkante lässt sich der spitze Umlenkwinkel einfach realisieren. Dadurch werden hohe Zugkräfte, die durch die Verschraubung beziehungsweise die Befestigung des freien Endes der Zugelements an dem Seitenelement in vorteilhafter Weise erreicht werden, gewährleistet.

Bevorzugt ist das Zugelement an einer weiteren Befestigungsstelle des anderen Seitenelements befestigt, wobei die weitere Befestigungsstelle ebenfalls als Schraubstelle ausgebildet ist, dass das Zugelement auch an dem anderen Seitenelement verschraubt ist. Hierdurch ergibt sich eine einfache Gesamtmontage des Rahmens.

Bevorzugt ist eine der Befestigungsstellen einer Zentralairbag-Halterung des Rahmens zugeordnet, insbesondere in diese integriert. Der Rahmen weist also eine Zentralairbag-Halterung auf, die im Bereich einer der Befestigungsstellen liegt. Dadurch liegt die Befestigungsstelle an einem Bereich des Rahmens, der für die Halterung und Aufnahme des Zentralairbags üblicherweise ohnehin versteift ausgebildet ist, wodurch sich eine vorteilhafte Befestigung des Zugelements sowie eine vorteilhafte Wirkung der Zugkraft auf den Rahmen ergibt.

Weiterhin ist bevorzugt vorgesehen, dass zumindest eine der Befestigungsstellen einer Seitenairbag-Halterung des Rahmens zugeordnet, insbesondere in diese integriert ist. Der Rahmen weist somit eine Seitenairbag-Halterung auf, wobei in der Nähe der Seitenairbag-Halterung die oder eine weitere Befestigungsstelle für das Zugelement angeordnet ist, sodass sich die zuvor genannten Vorteile bezüglich einer erhöhten Steifigkeit ergeben. Durch die Integration der Befestigungsstelle in die Seitenairbag-Halterung oder Zentralairbag-Halterung ergibt sich eine platzsparende Ausführungsform, bei welcher beispielsweise eine Befestigungsschraube zur Anordnung eines Seitenairbags oder Zentralairbags von dem Rahmen zusätzlich zur Spannung und Befestigung des Zugelements an dem Rahmen genutzt wird.

Der erfindungsgemäße Fahrzeugsitz mit den Merkmalen des Anspruchs 8 zeichnet sich durch die erfindungsgemäße Ausbildung des Rahmens aus. Es ergeben sich hierdurch die bereits genannten Vorteile.

Insbesondere weist der Rahmen eine Zentralairbag-Halterung auf, in welcher ein Zentralairbag befestigt ist. Besonders bevorzugt ist der Zentralairbag durch zumindest eine Befestigungsschraube an dem Rahmen befestigt, wobei die Befestigungsschraube vorzugsweise auch das Zugelement an einer dafür vorgesehenen Befestigungsstelle des Rahmens befestigt.

Insbesondere ist die Zentralairbag-Halterung einem oberen Querelement des Rahmens zugeordnet. Dadurch ergibt sich, dass das Zugelement sich diagonal nach oben in Richtung der Zentralairbag-Halterung erstreckt. Weil die Zentralairbag-Halterung oder der Zentralairbag üblicherweise dem Fahrzeuginnenraum beziehungsweise einer Fahrzeuglängsmittellinie zugewandt sind, wird somit eine hohe Steifigkeit des Rahmens insbesondere bei einem sogenannten Far-Side-Seitencrash gewährleistet.

Bevorzugt weist der Rahmen außerdem eine Seitenairbag-Halterung auf, an welcher ein Seitenairbag befestigt ist, und welche dem unteren Querelement zugeordnet ist. Insbesondere ist der Seitenairbag-Halterung auch die weitere Befestigungsstelle für das Zugelement, wie zuvor bereits erwähnt, zugeordnet. Es ergeben sich dadurch die bereits genannten Vorteile. Das Zugelement erstreckt sich somit von der Seitenairbag-Halterung bis zur Zentralairbag-Halterung und ist damit in besonders steifen Abschnitten des Rahmens befestigt, wodurch sich eine hohe Robustheit des Fahrzeugsitzes und des Rahmens ergibt.

Das erfindungsgemäße Kraftfahrzeug mit den Merkmalen des Anspruchs 12 zeichnet sich dadurch aus, dass zumindest einer der Fahrzeugsitze erfindungsgemäß ausgebildet ist. Hierdurch ergeben sich die bereits genannten Vorteile.

Weitere Vorteile, bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen:
- Figur 1: ein Kraftfahrzeug mit vorteilhaften Fahrzeugsitzen in einer vereinfachten perspektivischen Darstellung,
- Figur 2: einen der Fahrzeugsitze in einer vereinfachten Rückansicht und
- Figur 3: eine vereinfachte Schnittdarstellung des Fahrzeugsitzes.

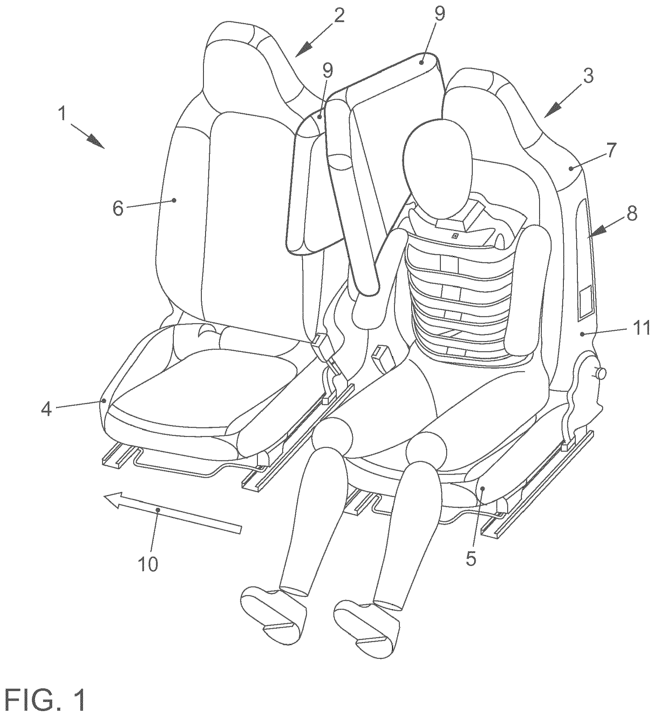

Figur 1 zeigt in einer vereinfachten perspektivischen Darstellung eine perspektivische Draufsicht auf den Innenraum eines Kraftfahrzeugs 1, in welchem zwei Fahrzeugsitze 2 und 3 nebeneinander angeordnet sind. Beide Fahrzeugsitze weisen jeweils ein Sitzteil 4, 5 sowie eine Rückenlehne 6, 7 auf. An der Rückenlehne 6, 7 ist jeweils ein Seitenairbag 8 angeordnet, der an einer Seitenfläche der jeweiligen Rückenlehne 7 beziehungsweise 6, die auf der von dem benachbarten Fahrzeugsitz 2 beziehungsweise 3 abgewandten Seite des jeweiligen Fahrzeugsitzes 3, 2 liegt, angeordnet. An den einander zugewandten Seitenflächen weisen die Rückenlehnen 6, 7 jeweils einen Zentralairbag 9 auf. Bei einem seitlichen Aufprallunfall, insbesondere bei einem sogenannten Fahr-Side-Seitencrash, wirkt eine seitliche Aufprallrichtung, wie durch einen Pfeil 10 in Figur 1 gezeigt. Bei einem derartigen Aufprall werden die Zentralairbags 9, wie in Figur 1 gezeigt, gezündet und schützen die auf den Fahrzeugsitzen 2, 3 befindlichen Personen. Außerdem treten Kräfte auf, die insbesondere auf die Rückenlehnen 6,7 wirken. Um zu vermeiden, dass sich die Rückenlehnen parallelogrammartig verformen, weisen sie eine vorteilhafte Einrichtung zur Verbesserung ihrer Steifigkeit auf.

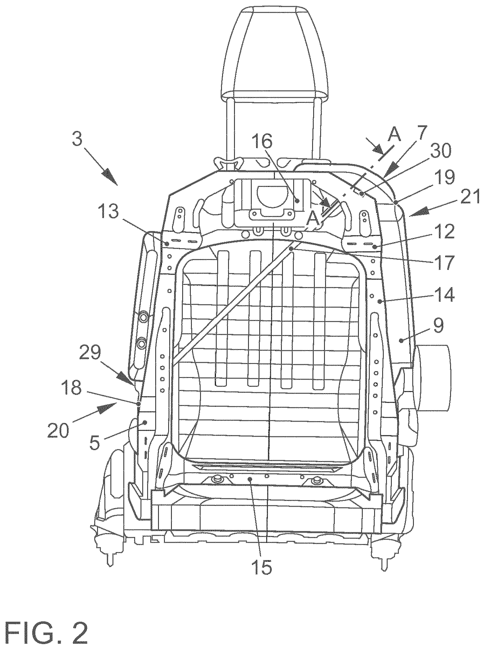

Figur 2 zeigt eine vereinfachten Rückansicht des Fahrzeugsitzes 3, wobei der Fahrzeugsitz 2 spiegelbildlich dazu ausgebildet ist. Die Rückenlehne 7 weist eine in Figur 1 gezeigte Polsterung 11 auf, die in Figur 2 fehlt. Getragen wird die Polsterung 11 von einem Rahmen 12 der Rückenlehne 7. Der Rahmen 12 weist zwei beabstandet und im Wesentlichen parallel zueinander angeordnete Seitenelemente 13, 14 auf, die durch zwei Querelemente 15, 16 fest miteinander verbunden sind. Das untenliegende Querelement 15 ist dabei etwas länger ausgebildet als das obenliegende Querelement 16, das auch als Träger für eine Kopfstütze dient. Die Querelemente 15, 16 verbinden jeweils zwei freie Enden der Seitenelemente 13, 14 fest miteinander, sodass sich ein steifer, im Wesentlichen rechteckförmiger Rahmen 12 ergibt.

Zum Erhöhen der Steifigkeit weist die Rückenlehne 7 beziehungsweise der Rahmen 12 ein diagonal über den Rahmen 12 gespanntes Zugelement 17 auf. Das Zugelement 17 ist insbesondere als flexibles Zugelement17 ausgebildet, das in Zugrichtung zumindest im Wesentlichen undehnbar oder unstreckbar ist. An seinen beiden Enden ist das Zugelement 17 fest mit dem Rahmen 12 verbunden. Dazu ist ein erstes Ende 18 fest mit dem Seitenelement 13 verbunden, und das zweite Ende 19 fest mit dem Seitenelement 14. Dazu sind an den Seitenelementen 13, 14 Befestigungsstellen 20 beziehungsweise 21 vorgesehen, an welchen das Zugelement 17 jeweils befestigbar beziehungsweise befestigt ist.

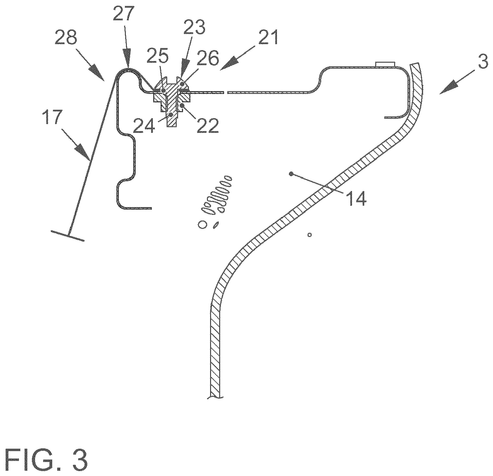

Figur 3 zeigt in einer vergrößerten Detail-Schnittdarstellung entlang der Linie A-A aus Figur 2die Befestigungsstelle 21 an dem Seitenelement 14. Die Befestigungsstelle 21 ist als Schraubbefestigungsstelle ausgebildet, wozu an dem Seitenelement 14 ein Schraubgewinde 22 in Form einer Gewindehülse angeordnet oder ausgebildet ist. In das Schraubgewinde 22 ist eine Befestigungsschraube 23 mit einem Schraubenschaft 24 einschraubbar. Das Zugelement 17 weist an seinem freien Ende eine Schraubenöffnung 25 auf, durch welche der Schraubenschaft 24 hindurchführbar und in das Schraubgewinde 22 einschraubbar ist, sodass ein Schraubenkopf 26 der Befestigungsschraube 23 das Zugelement 27 zwischen dem Seitenelement 14 und dem Schraubenkopf 26 verspannt.

Der Befestigungsstelle 21 zugeordnet ist ein das Zugelement 17 umlenkender Vorsprung 27. Dieser ist an einer Seitenkante des Seitenelements 14 ausgebildet, wobei es sich dabei um die Seitenkante 28 handelt, die dem benachbarten Seitenelement 13 zugewandt ist. Durch den Vorsprung 27 wird erreicht, dass das Zugelement 17 um einen spitzen Winkel um den Vorsprung 27 in Richtung der Befestigungsstelle 21 beziehungsweise von der Befestigungsstelle 21 in Richtung des benachbarten Seitenelements 13 umgelenkt wird.

Wird bei der Montage das Zugelement 17 mit seinem freien Ende der Befestigungsstelle 21 zugeführt und ist an der anderen Befestigungsstelle 20 bereits befestigt, so wird durch das Einschrauben der Befestigungsschraube 23 erreicht, dass das Zugelement 17 durch den Vorsprung 27 auf Zug gespannt wird. Hierdurch wird die Rahmensteifigkeit erhöht.

Die Befestigungsstellen 20 und 21 sind dabei in Halterungen 29 beziehungsweise 30 für den Seitenairbag beziehungsweise den Zentralairbag 9 integriert, sodass die jeweilige Schraubstellen eine doppelte Aufgabe beziehungsweise eine doppelte Funktion erfüllt. Dadurch ist eine kompakte und hochsteife Ausbildung des Rahmens mit einer einfachen Montage gewährleistet, insbesondere weil die Halterungen 29, 30 die Steifheit des Rahmens im Bereich der Halterung weiter erhöhen.

### Bezugszeichenliste

- 1: Kraftfahrzeug
- 2: Fahrzeugsitz
- 3: Fahrzeugsitz
- 4: Sitzteil
- 5: Sitzteil
- 6: Rückenlehne
- 7: Rückenlehne
- 8: Seitenairbag
- 9: Zentralairbag
- 10: Pfeil
- 11: Polsterung
- 12: Rahmen
- 13: Seitenelement
- 14: Seitenelement
- 15: Querelement
- 16: Querelement
- 17: Zugelement
- 18: Ende
- 19: Ende
- 20: Befestigungsstelle
- 21: Befestigungsstelle
- 22: Schraubgewinde
- 23: Befestigungsschraube
- 24: Schraubenschaft
- 25: Schraubenöffnung
- 26: Schraubenkopf
- 27: Vorsprung
- 28: Seitenkante
- 29: Halterung
- 30: Halterung

## Patentansprüche

1. Rahmen (12) für einen Fahrzeugsitz (2,3), wobei der Rahmen (12) zwei Seitenelemente (13,14) und zwei Querelemente (15,16) aufweist, wobei die Querelemente (15,16) jeweils zwei einander gegenüberliegende freie Enden der Seitenelemente (13,14) miteinander verbinden, mit zumindest einem flexiblen Zugelement (17), das diagonal über den Rahme (12) derart gespannt ist, das ein erstes Ende des Zugelements (17) an einem der Seitenelemente (13) und ein zweites Ende des Zugelements (17) an dem anderen der Seitenelemente (14) befestigt ist, **dadurch gekennzeichnet, dass** zumindest eines der Seitenelemente (13,14) einen einer Befestigungsstelle (20,21) des Zugelements (17) an dem Seitenelement (13,14) zugeordneten und das Zugelement (17) umlenkenden Vorsprung (27) aufweist, durch welchen das Zugelement (17) beim Befestigen an der Befestigungsstelle (20,21) gespannt wird..

2. Rahmen nach Anspruch 1, **dadurch gekennzeichnet, dass** die Befestigungsstelle (20,21) als Schraubbefestigungsstelle ausgebildet ist, wobei das Zugelement (17) eine Schraubenöffnung (25) aufweist, durch welche ein Schaft (24) einer Befestigungsschraube (23) in die Schraubbefestigungsstelle eingeschraubt ist, wobei das Zugelement (17) zwischen einem Schraubenkopf (26) der Befestigungsschraube (23) und dem Seitenelement (14) verspannt ist.

3. Rahmen nach einem der vorhergehenden Ansprüche, **dadurch gekennzeichnet, dass** der Vorsprung (27) an einer Seitenkante (28) des Seitenelements (14) ausgebildet ist.

4. Rahmen nach einem der vorhergehenden Ansprüche, **dadurch gekennzeichnet, dass** das Zugelement (17) durch den Vorsprung (27) in einem spitzen Winkel umgelenkt ist.

5. Rahmen nach einem der vorhergehenden Ansprüche, **dadurch gekennzeichnet, dass** beide Befestigungsstellen (20,21) als Schraubbefestigungsstellen ausgebildet sind.

6. Rahmen nach einem der vorhergehenden Ansprüche, **dadurch gekennzeichnet, dass** eine der Befestigungsstellen (20) einer Seitenairbag-Halterung (29) des Rahmens (12) zugeordnet, insbesondere in diese integriert ist.

7. Rahmen nach einem der vorhergehenden Ansprüche, **dadurch gekennzeichnet, dass** eine der Befestigungsstellen (21) einer Zentralairbag-Halterung (30) des Rahmens (12) zugeordnet, insbesondere in diese integriert ist.

8. Fahrzeugsitz (2,3) für ein Kraftfahrzeug (1), mit einer Rückenlehne (6,7), die einen Rahmen (12) und eine von dem Rahmen (12) getragene Polsterung (11) aufweist, **gekennzeichnet durch** die Ausbildung des Rahmens (12) nach einem der Ansprüche 1 bis 7.

9. Fahrzeugsitz nach Anspruch 8, **dadurch gekennzeichnet, dass** der Rahmen (12) eine Zentralairbag-Halterung (30) aufweist, und dass an der Zentralairbag-Halterung (30) ein Zentralairbag (9) befestigt ist.

10. Fahrzeugsitz (2,3) nach einem der vorhergehenden Ansprüche, **dadurch gekennzeichnet, dass** die Zentralairbag-Halterung (30) dem oberen Querelement (16) des Rahmens (12) zugeordnet ist.

11. Fahrzeugsitz (2,3) nach einem der vorhergehenden Ansprüche, **dadurch gekennzeichnet, dass** der Rahmen (12) eine Seitenairbag-Halterung (29) aufweist, an welcher ein Seitenairbag (8) befestigt ist, und welche dem unteren Querelement (15) zugeordnet ist.

12. Kraftfahrzeug (1) mit mehreren Fahrzeugsitzen (2,3), wobei zumindest einer der Fahrzeugsitze (2,3) nach einem der Ansprüche 8 bis 11 ausgebildet ist.

## Claims

1. A frame (12) for a vehicle seat (2,3), the frame (12) having two side elements (13,14) and two transverse elements (15,16), the transverse elements (15,16) each connecting two mutually opposite free ends of the side elements (13,14) to one another by means of at least one flexible tension element (17), which is tensioned diagonally over the frame (12) in such a way that a first end of the tension element (17) is fastened to one of the side elements (13) and a second end of the tension element (17) is fastened to the other of the side elements (14), **characterized in that** at least one of the side elements (13,14) has a projection (27) that is associated with a fastening point (20,21) of the tension element (17) on the side element (13,14) and deflects the tension element (17), by means of which projection the tension element (17) is tensioned when fastened at the fastening point (20,21).

2. The frame according to claim 1, **characterized in that** the fastening point (20,21) is designed as a screw fastening point, the tension element (17) having a screw opening (25) through which a shank (24) of a fastening screw (23) is screwed into the screw fastening point, the tension element (17) being clamped between a screw head (26) of the fastening screw (23) and the side element (14).

3. The frame according to any of the preceding claims, **characterized in that** the projection (27) is formed on a side edge (28) of the side element (14).

4. The frame according to any of the preceding claims, **characterized in that** the tension element (17) is deflected by the projection (27) at an acute angle.

5. The frame according to any of the preceding claims, **characterized in that** the two fastening points (20,21) are designed as screw fastening points.

6. The frame according to any of the preceding claims, **characterized in that** one of the fastening points (20) is associated with a side airbag holder (29) of the frame (12); in particular it is integrated therein.

7. The frame according to any of the preceding claims, **characterized in that** one of the fastening points (21) is associated with a central airbag holder (30) of the frame (12); in particular it is integrated therein.

8. A vehicle seat (2,3) for a motor vehicle (1), comprising a backrest (6,7), which has a frame (12) and a padding (11) supported by the frame (12), **characterized by** the design of the frame (12) according to any of claims 1 to 7.

9. The vehicle seat according to claim 8, **characterized in that** the frame (12) has a central airbag holder (30), **and in that** a central airbag (9) is fastened to the central airbag holder (30).

10. The vehicle seat (2,3) according to any of the preceding claims, **characterized in that** the central airbag holder (30) is associated with the upper transverse element (16) of the frame (12).

11. The vehicle seat (2,3) according to any of the preceding claims, **characterized in that** the frame (12) has a side airbag holder (29) to which a side airbag (8) is fastened and which is associated with the lower transverse element (15).

12. A motor vehicle (1) comprising a plurality of vehicle seats (2,3), wherein at least one of the vehicle seats (2,3) is designed according to any of claims 8 to 11.

## Revendications

1. Cadre (12) pour un siège de véhicule (2, 3), le cadre (12) présentant deux éléments latéraux (13, 14) et deux éléments transversaux (15, 16), les éléments transversaux (15, 16) reliant respectivement deux extrémités libres opposées l'une à l'autre des éléments latéraux (13, 14), avec au moins un élément de traction (17) flexible, qui est tendu en diagonale sur le cadre (12) de telle sorte qu'une première extrémité de l'élément de traction (17) soit fixée sur l'un des éléments latéraux (13) et une deuxième extrémité de l'élément de traction (17) soit fixée sur l'autre des éléments latéraux (14), **caractérisé en ce qu'au** moins un des éléments latéraux (13, 14) présente une partie saillante (27) associée à un point de fixation (20, 21) de l'élément de traction (17) sur l'élément latéral (13, 14) et déviant l'élément de traction (17), par l'intermédiaire de laquelle l'élément de traction (17) est tendu lors de la fixation au point de fixation (20, 21).

2. Cadre selon la revendication 1, **caractérisé en ce que** le point de fixation (20, 21) est formé comme un point de fixation par vis, dans lequel l'élément de traction (17) présente une ouverture de vis (25), à travers laquelle un arbre (24) d'une vis de fixation (23) est vissé dans le point de fixation par vis, dans lequel l'élément de traction (17) est tendu entre une tête de vis (26) de la vis de fixation (23) et l'élément latéral (14).

3. Cadre selon l'une quelconque des revendications précédentes, **caractérisé en ce que** la partie saillante (27) est formée sur une arête latérale (28) de l'élément latéral (14).

4. Cadre selon l'une quelconque des revendications précédentes, **caractérisé en ce que** l'élément de traction (17) est dévié par la partie saillante (27) selon un angle aigu.

5. Cadre selon l'une quelconque des revendications précédentes, **caractérisé en ce que** les deux points de fixation (20, 21) sont conçus comme des points de fixation par vis.

6. Cadre selon l'une quelconque des revendications précédentes, **caractérisé en ce qu'un** des points de fixation (20) est associé à un support de coussin latéral de sécurité gonflable (29) du cadre (12), en particulier intégré dans celui-ci.

7. Cadre selon l'une quelconque des revendications précédentes, **caractérisé en ce qu'un** des points de fixation (21) est associé à un support de coussin central de sécurité gonflable (30) du cadre (12), en particulier intégré dans celui-ci.

8. Siège de véhicule (2,3) pour un véhicule automobile (1), présentant un dossier (6,7), qui présente un cadre (12) et un rembourrage (11) porté par le cadre (12), **caractérisé par** la formation du cadre (12) selon l'une quelconque des revendications 1 à 7.

9. Siège de véhicule selon la revendication 8, **caractérisé en ce que** le cadre (12) comporte un support de coussin central de sécurité gonflable (30) et **en ce qu'**un coussin central de sécurité gonflable (9) est fixé sur le support de coussin central de sécurité gonflable (30).

10. Siège de véhicule (2, 3) selon l'une quelconque des revendications précédentes, **caractérisé en ce que** le support de coussin central de sécurité gonflable (30) est associé à l'élément transversal supérieur (16) du cadre (12).

11. Siège de véhicule (2, 3) selon l'une quelconque des revendications précédentes, **caractérisé en ce que** le cadre (12) comporte un support de coussin latéral de sécurité gonflable (29), sur lequel un coussin latéral de sécurité gonflable (8) est fixé et qui est associé à l'élément transversal inférieur (15).

12. Véhicule à moteur (1) comportant plusieurs sièges de véhicule (2, 3), dans lequel un des sièges de véhicule (2, 3) est formé selon l'une quelconque des revendications 8 à 11.
